# EUROPEAN PATENT SPECIFICATION

(11) **EP 2 128 090 B1**
(45) Date of publication and mention of the grant of the patent: **16.05.2012**
(21) Application number: 08722184.2
(22) Date of filing: 14.03.2008
(51) Int. Cl.: C01B 33/12, C09D 7/12, C09D 201/00

(54) **HOLLOW MICROPARTICLE, METHOD FOR PRODUCTION THEREOF, COATING COMPOSITION, AND ARTICLE HAVING COATING FILM FORMED THEREON**
HOHLES MIKROTEILCHEN, HERSTELLUNGSVERFAHREN DAFÜR, BESCHICHTUNGSZUSAMMENSETZUNG UND GEGENSTAND MIT EINEM DARAUF AUSGEBILDETEN BESCHICHTUNGSFILM
MICROPARTICULES CREUSES, LEUR PROCÉDÉ DE FABRICATION, COMPOSITION DE REVÊTEMENT ET ARTICLE AYANT UN FILM DE REVÊTEMENT FORMÉ SUR CELUI-CI

(30) Priority: 16.03.2007 JP 2007069317
(43) Date of publication of application: 02.12.2009
(73) Proprietor: Asahi Glass Company, Limited, Chiyoda-ku Tokyo 100-8405 (JP)
(72) Inventor: KAWAI, Yohei, Tokyo 100-8405 (JP); YONEDA, Takashige, Tokyo 100-8405 (JP)
(74) Representative: Müller-Boré & Partner Patentanwälte
(86) International application number: PCT/JP2008/054788
(87) International publication number: WO 2008/114744

(56) References cited:
- EP-A1- 1 591 509
- EP-A1- 1 887 059
- WO-A1-2006/009132
- JP-A- 2001 233 611
- JP-A- 2005 053 737
- US-A1- 2007 022 798
- US-A1- 2007 048 513

## Description

The present invention relates to hollow fine particles, a production process thereof, a coating composition, and an article having a coating film having a high antireflection effect and excellent alkali resistance formed thereon.

As an antireflection film, heretofore, the following have been known.
(1) An antireflection film containing hollow fine particles comprising SiO₂ and a binder (Patent Document 1).
(2) An antireflection film formed from a binder containing hollow fine particles comprising SiO₂ and organic zirconium (Patent Document 2).

With respect to the antireflection film of the above (1), since the alkali resistance of the hollow fine particles is insufficient, the antireflection effect by the hollow fine particles will decrease when the film is exposed to an alkali. Further, with respect to the antireflection film of the above (2), although the alkali resistance of the binder is favorable, the alkali resistance of the hollow fine particles themselves is insufficient, and accordingly the antireflection effect by the hollow fine particles will decrease when the film is exposed to an alkali.
Patent Document 1: JP-A-2001-233611
Patent Document 2: JP-A-2003-298087

US 2007/002798 A1 describes a method of treating an optical film wherein easily generated coating defects such as chatter, a coating streak and comet (comet failure) when coating a functional layer such as an anti-reflection layer on a long-length film, are improved, a apparatus of treating the optical film and a manufacturing method for the optical film.

WO 2006/009132 A1 describes hollow and spherical silica-based fine particles having a porous material and/or cavities inside an outer shell, wherein said particles exhibit a low refractive index.

The present invention provides hollow fine particles with which a coating film having a high antireflection effect and excellent alkali resistance can be obtained, a production process thereof, a coating composition with which a coating film having a high antireflection effect and excellent alkali resistance can be formed, and an article which maintains a high antireflection effect for a long period of time.

The present invention provides the following:
1. Hollow fine particles containing SiO₂ as the main component and containing Zr, wherein the Zr content (as calculated as ZrO₂) is from 0.1 to 15 parts by mass based on 100 parts by mass of SiO₂,
   wherein Zr is segregated in the outermost layer of the shell,
   wherein the average primary particle size of the hollow fine particles is from 5 to 100 nm, measured by observation with a transmission electron microscope, and wherein the average agglomerated particle size of the hollow fine particles is from 5 to 300 nm, measured by a dynamic light scattering method.
2. A coating composition containing the hollow fine particles as defined in item 1 and a dispersion medium.
3. The coating composition according to item 2, which further contains a binder.
4. An article comprising a substrate and a coating film made of the coating composition as defined in item 2 or 3 formed on the substrate.
5. A process for producing hollow fine particles containing SiO₂ as the main component and containing Zr, which comprises
   (a) a step of, in a dispersion containing a SiO₂ precursor material, a zirconium compound and core fine particles, precipitating a shell containing SiO₂ as the main component and containing Zr on the surface of each core fine particle to obtain core/shell particles, and
   (b) a step of dissolving or decomposing the core fine particles of the core/shell fine particles, wherein the amount of the zirconium compound (as calculated as ZrO₂) is from 0.1 to 15 parts by mass based on 100 parts by mass of the amount of the SiO₂ precursor material (as calculated as SiO₂),
   wherein in the step (a), in a dispersion containing a SiO₂ precursor material and core fine particles, a shell made of SiO₂ is precipitated on the surface of each core fine particle,
   and then a zirconium compound is added to segregate Zr on the outermost layer of the shell,
   wherein the average primary particle size of the hollow fine particles is from 5 to 100 nm, measured by observation with a transmission electron miscroscope, and wherein the average agglomerated particle size of the hollow fine particles is from 5 to 300 nm, measured by a dynamic light scattering method.
6. The process for producing hollow fine particles according to item 5, wherein the SiO₂ precursor material is silicic acid, a silicate or a hydrolysable silane.
7. The process for producing hollow fine particles according to item 5 or 6, wherein the zirconium compound is a zirconium chelate compound, a zirconium alcoholate compound, or an organic acid or an inorganic acid of zirconium.

According to the hollow fine particles of the present invention, a coating film having a high antireflection effect and excellent alkali resistance can be obtained.

With the coating composition of the present invention, a coating film having a high antireflection effect and excellent alkali resistance can be formed.

The article of the present invention can maintain a high antireflection effect for a long period of time.

According to the process for producing hollow fine particles of the present invention, hollow fine particles with which a coating film having a high antireflection effect and excellent alkali resistance can be obtained, can be produced.

### (HOLLOW FINE PARTICLES)

Hollow fine particles are particles each having an air gap in the interior of the shell. The hollow fine particles may, for example, be spherical hollow fine particles, fibrous hollow fine particles, tubular hollow fine particles or sheet-form hollow fine particles. The fibrous hollow fine particles are hollow fine particles of which the length in the extended direction is longer than the length in the direction perpendicular to the extended direction. The fibrous hollow fine particles may be primary particles or may be secondary particles which are agglomerates of a plurality of hollow fine particles.

The hollow fine particles contain SiO₂ as the main component and contain Zr. Zr preferably forms a composite oxide with Si in view of the alkali resistance of the hollow fine particles. Zr is segregated in the outermost layer of the shell rather than it exists in the entire shell of the hollow fine particles, whereby the effect of protecting the inside SiO₂ layer tends to be high, thus leading to excellent alkali resistance.

The ratio of SiO₂ is preferably at least 90 mass% in the hollow fine particles (100 mass%) with a view to suppressing the refractive index of the hollow fine particles.

The Zr content (as calculated as ZrO₂) is from 0.1 to 15 parts by mass, preferably from 0.3 to 10 parts by mass based on 100 parts by mass of SiO₂. When the amount of Zr (as calculated as ZrO₂) is at least 0.1 part by mass, the alkali resistance of the hollow fine particles will be favorable. When the amount of Zr (as calculated as ZrO₂) is at most 15 parts by mass, the refractive index of the hollow fine particles will be suppressed.

The average agglomerated particle size of the hollow fine particles is from 5 to 300 nm, more preferably from 10 to 100 nm. If the average agglomerated particle size of the hollow fine particles is at least 5 nm, a sufficient air gap is formed between adjacent hollow fine particles, whereby the refractive index of the coating film will be low, thus leading to a high antireflection effect. When the average agglomerated particle size of the hollow fine particles is at most 300 nm, scattering of light will be suppressed, whereby a coating film with high transparency will be obtained.

The average agglomerated particle size of the hollow fine particles is the average agglomerated particle size of the hollow fine particles in a dispersion medium and is measured by dynamic light scattering method.

The average primary particle size of the hollow fine particles is from 5 to 100 nm, particularly preferably from 5 to 50 nm. When the average primary particle size of the hollow fine particles is within these ranges, a high antireflection effect of the coating film will be obtained.

The average primary particle size of the hollow fine particles is the average of particle sizes of 100 hollow fine particles randomly selected by observation with a transmission electron microscope. In the case of fibrous, tubular, sheet-form hollow fine particles, etc., the major axis is regarded as the particle size.

The refractive index of the hollow fine particles is preferably from 1.1 to 1.4, more preferably from 1.2 to 1.35. When the refractive index of the hollow fine particles is at least 1.1, a coating film having a refractive index of at least 1.2 is likely to be obtained, and a coating film having a high antireflection effect will be obtained when glass is used as the substrate. Further, when the refractive index of the hollow fine particles is at least 1.1, a shell with a sufficient thickness will be obtained, whereby the strength of the hollow fine particles will be high.

When the refractive index of the hollow fine particles is at most 1.4, a coating film having a refractive index of at most 1.4 is likely to be obtained, and a high coating film having a high antireflection effect will be obtained when glass is used as the substrate.

The refractive index of the hollow fine particles is the refractive index at 550 nm, and is calculated by measuring the refractive index by a refractometer as dispersed in a dispersion medium or in the form of a coating film with a binder, which is calculated by the volume fraction.

The hollow fine particles of the present invention may contain a metal other than Si and Zr, such as Al, Cu, Ce, Sn, Ti, Cr, Co, Fe, Mn, Ni or Zn within a range not to impair the effects of the present invention.

### (PROCESS FOR PRODUCING HOLLOW FINE PARTICLES)

The hollow fine particles are preferably produced by a production process comprising the following steps (a) and (b).
(a) A step of, in a dispersion containing a SiO₂ precursor material, a zirconium compound and core fine particles in a dispersion medium, precipitating a shell containing SiO₂ as the main component and containing Zr on the surface of each core fine particle to obtain core/shell particles.
(b) A step of dissolving or decomposing the core fine particles of the core/shell particles.

### Step (a):

The core fine particles are such that the average primary particle size is from 5 to 100 nm, and the average agglomerated particle size is from 5 to 300 nm. Their material may, for example, be heat decomposable organic fine particles (such as surfactant micells, a water soluble organic polymer, a styrene resin or an acrylic resin), acid-soluble inorganic fine particles (such as ZnO, NaAlO₂, CaCO₃ or basic ZnCO₃) or photo-soluble inorganic fine particles (such as ZnS, CdS or ZnO).

The SiO₂ precursor material is preferably silicic acid, a silicate, a hydrolyzable silane (such as a C₁₋₄ tetraalkoxysilane such as tetramethoxysilane or tetraethoxysilane) or the like.

The zirconium compound may, for example, be a zirconium chelate compound, a zirconium alcoholate, a zirconium organic acid salt or a zirconium inorganic acid salt, and is preferably a zirconium chelate compound in view of stability of the hollow fine particles.

The zirconium chelate compound may, for example, be zirconium acetylacetonate or zirconium tributoxystearate, and is preferably zirconium acetylacetonate in view of the stability of the hollow fine particles.

The zirconium alcoholate may, for example, be zirconium ethoxide, zirconium propoxide, zirconium isopropoxide or zirconium butoxide.

The zirconium organic acid salt may, for example, be zirconium acetate or zirconium stearate. The zirconium inorganic acid salt may, for example, be zirconium nitrate or zirconium sulfate.

The content of the zirconium compound (as calculated as ZrO₂) in the dispersion medium is from 0.1 to 15 parts by mass, preferably from 0.3 to 10 parts by mass based on 100 parts by mass of the amount of the SiO₂ precursor material (as calculated as SiO₂). When the zirconium compound content (as calculated as ZrO₂) is at least 0.1 part by mass, the alkali resistance of the hollow fine particles will be favorable. When the zirconium compound content (as calculated as ZrO₂) is at most 15 parts by mass, the refractive index of the hollow fine particles will be suppressed.

The dispersion medium may, for example, be water, an alcohol (such as methanol, ethanol or isopropanol), a ketone (such as acetone or methyl ethyl ketone), an ether (such as tetrahydrofuran or 1,4-dioxane), an ester (such as ethyl acetate or methyl acetate), a glycol ether (such as ethylene glycol monoalkyl ether), a nitrogen-containing compound (such as N,N-dimethylacetamide or N,N-dimethylformamide) or a sulfur-containing compound (such as dimethyl sulfoxide).

The dispersion medium contains water in an amount of preferably from 5 to 100 mass%, particularly preferably from 10 to 50 mass% based on 100 mass% of the dispersion medium, since water is necessary for hydrolysis of the SiO₂ precursor material.

The pH of the dispersion medium is preferably at least 7, more preferably at least 8, particularly preferably from 9 to 10, from such a viewpoint that the SiO₂ precursor material is likely to be three-dimensionally polymerized to form the shell. In a case where acid-soluble inorganic fine particles are used as the core fine particles, a pH at which the fine particles will not be dissolved, i.e. at least 8, is preferred.

According to the present invention, in the step (a), in the dispersion containing a SiO₂ precursor material and core fine particles, a shell comprising SiO₂ is precipitated on the surface of each core fine particle, and then a zirconium compound is added to segregate Zr in the outermost layer of the shell. It is more preferred to add the zirconium compound to the dispersion after preferably at least 1/2, particularly preferably from 3/4 to 4/4 based on the mass of SiO₂ is precipitated.

### Step (b):

In a case where the core fine particles are acid-soluble inorganic fine particles, the core fine particles can be dissolved and removed by adding an acid.

The acid may, for example, be an inorganic acid (such as hydrochloric acid, sulfuric acid or nitric acid), an organic acid (such as formic acid or acetic acid) or an acidic cation exchange resin.

### (COATING COMPOSITION)

The coating composition of the present invention contains hollow fine particles and a dispersion medium and as the case requires, a binder.

The dispersion medium may, for example, be water, an alcohol (such as methanol, ethanol or isopropanol), a ketone (such as acetone or methyl ethyl ketone), an ether (such as tetrahydrofuran or 1,4-dioxane), an ester (such as ethyl acetate or methyl acetate), a glycol ether (such as ethylene glycol monoalkyl ether), a nitrogen-containing compound (such as N,N-dimethylacetamide or N,N-dimethylformamide) or a sulfur-containing compound (such as dimethyl sulfoxide).

The binder may, for example, be a hydrolyzable silane (such as tetramethoxysilane or tetraethoxysilane), a silicic acid oligomer obtained by hydrolyzing a hydrolyzable silane, a silicon compound having a silanol group (such as silicic acid or trimethyl silanol), active silica (such as water glass or sodium orthosilicate) or an organic polymer (such as polyethylene glycol, a polyacrylamide derivative or polyvinyl alcohol).

It is more preferred to add a zirconium compound to the binder, whereby the alkali resistance of the hollow fine particles will improve.

The mass ratio of the hollow fine particles to the binder (hollow fine particles/binder) is preferably from 10/0 to 5/5, more preferably from 9/1 to 7/3. When the mass ratio of the hollow fine particles/binder is within these ranges, a coating film which has a sufficient alkali resistance, of which the refractive index is kept low, and which has a high antireflection effect, can be formed.

The solid content concentration of the coating composition of the present invention is preferably from 0.1 to 20 mass%.

The coating composition of the present invention may contain hollow fine particles other than the hollow fine particles of the present invention or solid fine particles within a range not to impair the effects of the present invention. In such a case, the average agglomerated particle size of such inorganic fine particles in the dispersion containing the hollow fine particles of the present invention, and the hollow fine particles other than the hollow fine particles of the present invention or the solid fine particles is preferably from 5 to 300 nm, more preferably from 10 to 100 nm. The average agglomerated particle size can be measured by dynamic light scattering method.

The coating composition of the present invention may contain known additives such as an alkaline earth metal salt such as a chloride, a nitrate, a sulfate, a formate or an acetate of e.g. Mg, Ca, Sr or Ba; a curing catalyst such as an inorganic acid, an organic acid, a base, a metal chelate compound, a quaternary ammonium salt or an organic tin compound; inorganic fine particles showing ultraviolet shielding properties, infrared shielding properties or electroconductive properties; or a pigment, a dye or a surfactant.

### (ARTICLE HAVING COATING FILM FORMED)

The article of the present invention is an article having a coating film made of the coating composition of the present invention formed thereon.

The thickness of the coating film is preferably from 50 to 300 nm, more preferably from 80 to 200 nm. When the thickness of the coating film is at least 50 nm, interference of light will occur, whereby antireflection performance will be developed. When the thickness of the coating film is at most 300 nm, a film can be formed without cracking.

The thickness of the coating film is obtained by measuring the interface between the coated surface and the non-coated surface by a profilometer.

The refractive index of the coating film is preferably from 1.2 to 1.4, more preferably from 1.23 to 1.35. When the refractive index of the coating film is at least 1.2, the light reflected on the upper film surface and the light reflected on the lower film surface are offset by interference, whereby a coating film having a high antireflection effect is obtained. When the refractive index of the coating film is at most 1.4, the light reflected on the upper film surface and the light reflected on the lower film surface are offset by interference, whereby a coating film having a high antireflection effect will be obtained when glass is used as the substrate. The refractive index of the coating film is preferably from 0.0 to 1.4%, more preferably from 0.0 to 1.0%.

The refractive index of the coating film is a refractive index at 550 nm and is measured by a refractometer.

The coating film is formed by applying the coating composition of the present invention to the surface of a substrate and drying it.

The coating film is preferably further heated or baked in view of the film strength.

The material of the substrate may, for example, be glass, a metal, an organic polymer or silicon, and the substrate may be a substrate having any coating film preliminarily formed thereon. As the glass, not only smooth glass formed by float process or the like but also patterned glass obtained by rollout process by supplying molten glass between a roll member having irregularities imprinted on the surface and another roll member may be used. Particularly, patterned glass having a coating film formed by applying and drying the coating composition of the present invention can be preferably used as a cover glass for solar cells. In such a case, the coating film is preferably formed on the smooth surface (a surface with a low degree of irregularities) of the patterned glass. The organic polymer may, for example, be polyethylene terephthalate (hereinafter referred to as PET), polycarbonate, polymethyl methacrylate or triacetyl acetate.

The shape of the substrate may, for example, be a plate or a film.

On the article of the present invention, another functional layer (such as an adhesion-improving layer or a protective layer) may be formed within a range not to impair the effects of the present invention. In the present invention, it is preferred that only the coating film of the present invention is formed, in view of the productivity and durability.

As the coating method, a known method such as bar coating, die coating, gravure coating, roll coating, flow coating, spray coating, online spray coating or dip coating may be mentioned. The online spray coating is a method of spray coating on the same line for formation of the substrate, and is capable of producing articles at a low cost and is useful, since a step of re-heating the substrate can be omitted.

The above-described hollow fine particles of the present invention are hollow fine particles containing SiO₂ as the main component and containing Zr, wherein the Zr content (as calculated as ZrO₂), is from 0.1 to 15 parts by mass based on 100 parts by mass of SiO₂, wherein Zr is segregated in the outermost layer of the shell, wherein the average primary particle size of the hollow fine particles is from 5 to 100 nm, measured by observation with a transmission electron microscope, and wherein the average agglomerated particle size of the hollow fine particles is from 5 to 300 nm, measured by a dynamic light scattering method, and accordingly their refractive index is suppressed and they are excellent in alkali resistance. Thus, a coating film having a high antireflection effect and excellent alkali resistance can be obtained.

The above-described process for producing hollow fine particles of the present invention comprises (a) a step of, in a dispersion containing a SiO₂ precursor material, a zirconium compound and core fine particles, precipitating a shell containing SiO₂ as the main component and containing Zr on the surface of each core fine particle to obtain core/shell particles, and (b) a step of dissolving or decomposing the core fine particles of the core/shell fine particles, wherein the amount of the zirconium compound (as calculated as ZrO₂) is from 0.1 to 15 parts by mass based on 100 parts by mass of the amount of the SiO₂ precursor material (as calculated as SiO₂), wherein in the step (a), in a dispersion containing a SiO₂ precursor material and core fine particles, a shell made of SiO₂ is precipitated on the surface of each core fine particle, and then a zirconium compound is added to segregate Zr on the outermost layer of the shell, wherein the average primary particle size of the hollow fine particles is from 5 to 100 nm, measured by observation with a transmission electron miscroscope, and wherein the average agglomerated particle size of the hollow fine particles is from 5 to 300 nm, measured by a dynamic light scattering method, and accordingly hollow fine particles with which a coating film having a high antireflection effect and excellent alkali resistance can be obtained, can be produced.

With the above-described coating composition of the present invention, which contains the hollow fine particles of the present invention having a refractive index suppressed and having excellent alkali resistance, a coating film having an antireflection effect and excellent alkali resistance can be formed.

The above-described article of the present invention has a coating film made of the coating composition of the present invention formed on a substrate, and accordingly it can maintain a high antireflection effect for a long period of time.

### EXAMPLES

Now, the present invention will be described in further detail with reference to Examples. However, it should be understood that the present invention is by no means restricted to such specific Examples.

Examples 1 to 11 are Examples of the present invention, and Examples 12 to 18 are Comparative Examples.

### (AVERAGE PRIMARY PARTICLE SIZE OF HOLLOW FINE PARTICLES)

The average primary particle size of the hollow fine particles was measured as follows. A dispersion of the hollow fine particles was diluted to 0.1 mass% with ethanol, sampled on a collodion membrane and observed by a transmission electron microscope (manufactured by Hitachi Limited, H-9000). One hundred hollow fine particles were randomly selected, the particle sizes of the respective hollow fine particles were measured, and the average of the particle sizes of the one hundred hollow fine particles were obtained to determine the average primary particle size of the hollow fine particles.

### (AVERAGE AGGLOMERATED PARTICLE SIZE OF HOLLOW FINE PARTICLES)

The average agglomerated particle size of the hollow fine particles was measured by a dynamic light scattering particle size analyzer (manufactured by NIKKISO CO., LTD., Microtrac UPA).

### (AMOUNT OF Zr CONTAINED IN HOLLOW FINE PARTICLES)

The amount of Zr (as calculated as ZrO₂) contained in the hollow fine particles was obtained by measuring the amounts of Si and Zr by a fluorescent X-ray analyzer (manufactured by Rigaku Corporation, RIX3000), obtaining their amounts as calculated as oxide, and calculating the amount of Zr (as calculated as ZrO₂) based on 100 parts by mass of SiO₂.

### (MINIMUM REFLECTANCE)

The reflectance of the coating film on the substrate at from 380 to 1,200 nm was measured by a spectrophotometer (manufactured by Hitachi Limited, model: U-4100) to obtain the minimum value of the reflectance (minimum reflectance).

As an alkali resistance test, an article was immersed in a 3 mass% aqueous sodium hydroxide solution for 24 hours, and the reflectance was measured in the same manner to obtain the minimum value of the reflectance (minimum reflectance).

The difference (Δ reflectance) between the minimum reflectance after the alkali resistance test and the initial minimum reflectance (before alkali resistance test) was determined.

### Preparation of silicic acid oligomer solution:

5 g of a 60 mass% aqueous nitric acid solution was added to 95 g of an ethanol solution of tetraethoxysilane (solid content concentration: 5 mass% as calculated as SiO₂), whereby tetraethoxysilane was hydrolyzed to obtain a silicic acid oligomer solution (solid content concentration: 5 mass%).

### EXAMPLE 1

To a 200 mL glass container, 58.984 g of ethanol, 30.000 g of a water-dispersed sol of fine ZnO particles (average primary particle size: 20 nm, average agglomerated particle size: 40 nm, solid content concentration: 20 mass%) and 10.000 g of tetraethoxysilane (solid content concentration: 28.84 mass% as calculated as SiO₂) were added, and 1.000 g of a 28 mass% aqueous ammonia solution was added to adjust the pH to 10, followed by stirring at 20°C for 4 hours. Then, 0.016 g of zirconium acetylacetonate (0.14 part by mass as calculated as ZrO₂ based on 100 parts by mass of tetraethoxysilane as calculated as SiO₂) was added, followed by stirring at 20°C for 2 hours to obtain 100.000 g of a dispersion of core/shell particles (solid content concentration: 8.88 mass%). In each core/shell particle, SiO₂ was mainly precipitated in the inner layer portion of the shell, and Zr was segregated on the outermost layer of the shell. Accordingly, the structure was such that the Zr content increased from the shell inner layer portion to the shell outermost layer with a gradient.

100 g of a strongly acidic cation exchange resin (total exchange capacity: at least 2.0 meq/mL) was added to 100 g of the dispersion of the core/shell particles, followed by stirring for one hour, and after the pH became 4, the strongly acidic cation exchange resin was removed by filtration to obtain a dispersion of hollow fine particles. The dispersion was concentrated by ultrafiltration to a solid content concentration of 20 mass%. The dispersion was observed by a transmission electron microscope, whereupon the average primary particle size of the hollow fine particles was 30 nm. The average agglomerated particle size of the hollow fine particles was 60 nm, and the amount of Zr (as calculated as ZrO₂) contained in the hollow fine particles was 0.14 part by mass based on 100 parts by mass of SiO₂.

To a 200 mL glass container, 6 g of the dispersion (solid content concentration: 20 mass%) of the hollow fine particles, 6 g of a silicic acid oligomer solution (solid content concentration: 5 mass%) and 88 g of ethanol were added, followed by stirring for 10 minutes to obtain a coating composition (solid content concentration: 1.5 mass%).

The coating composition was applied to the surface of a glass substrate (100 mm x 100 mm x 3.5 mm in thickness) wiped with ethanol and spin-coated at a number of revolutions of 200 rpm for 60 seconds for uniformarization, and baked at 650°C for 10 minutes to form a coating film having a thickness of 100 nm, and various evaluations were carried out. The results are shown in Table 1.

### EXAMPLE 2

A dispersion of hollow fine particles was obtained in the same manner as in Example 1 except that the amount of ethanol was changed to 58.681 g, and the amount of zirconium acetylacetonate was changed to 0.320 g (2.8 parts by mass as calculated as ZrO₂ based on 100 parts by mass of tetraethoxysilane as calculated as SiO₂). The dispersion was concentrated to a solid content concentration of 20 mass% by ultrafiltration. The dispersion was observed by a transmission electron microscope, whereupon the average primary particle size of the hollow fine particles was 30 nm. The average agglomerated particle size of the hollow fine particles was 70 nm, and the amount of Zr (as calculated as ZrO₂) contained in the hollow fine particles was 2.8 parts by mass based on 100 parts by mass of SiO₂.

A coating film having a thickness of 100 nm was formed on a glass substrate in the same manner as in Example 1 except that the dispersion (solid content concentration: 20 mass%) of the hollow fine particles in Example 2 was used, and various evaluations were carried out. The results are shown in Table 1.

### EXAMPLE 3

A dispersion of hollow fine particles was obtained in the same manner as in Example 1 except that the amount of ethanol was changed to 57.391 g, and the amount of zirconium acetylacetonate was changed to 1.609 g (14.1 parts by mass as calculated as ZrO₂ based on 100 parts by mass of tetraethoxysilane as calculated as SiO₂). The dispersion was concentrated to a solid content concentration of 20 mass% by ultrafiltration. The dispersion was observed by a transmission electron microscope, whereupon the average primary particle size of the hollow fine particles was 30 nm. The average agglomerated particle size of the hollow fine particles was 90 nm, and the amount of Zr (as calculated as ZrO₂) contained in the hollow fine particles was 14.1 parts by mass based on 100 parts by mass of SiO₂.

A coating film having a thickness of 100 nm was formed on a glass substrate in the same manner as in Example 1 except that the dispersion (solid content concentration: 20 mass%) of the hollow fine particles in Example 3 was used, and various evaluations were carried out. The results are shown in Table 1.

### EXAMPLE 4

A dispersion of hollow fine particles was obtained in the same manner as in Example 2 except that the amount of ethanol was changed to 58.710 g, and 0.290 g of zirconium acetate (5.5 parts by mass as calculated as ZrO₂ based on 100 parts by mass of tetraethoxysilane as calculated as SiO₂) was used instead of 0.320 g of zirconium acetylacetonate. The dispersion was concentrated to a solid content concentration of 20 mass% by ultrafiltration. The dispersion was observed by a transmission electron microscope, whereupon the average primary particle size of the hollow fine particles was 30 nm. The average agglomerated particle size of the hollow fine particles was 80 nm, and the amount of Zr (as calculated as ZrO₂) contained in the hollow fine particles was 5.5 parts by mass based on 100 parts by mass of SiO₂.

A coating film having a thickness of 100 nm was formed on a glass substrate in the same manner as in Example 1 except that the dispersion (solid content concentration: 20 mass%) of the hollow fine particles in Example 4 was used, and various evaluations were carried out. The results are shown in Table 1.

### EXAMPLE 5

A dispersion of hollow fine particles was obtained in the same manner as in Example 2 except that the amount of ethanol was changed to 58.708 g, and 0.292 g of zirconium tributoxystearate (2.1 parts by mass as calculated as ZrO₂ based on 100 parts by mass of tetraethoxysilane as calculated as SiO₂) was used instead of 0.320 g of zirconium acetylacetonate. The dispersion was concentrated to a solid content concentration of 20 mass% by ultrafiltration. The dispersion was observed by a transmission electron microscope, whereupon the average primary particle size of the hollow fine particles was 30 nm. The average agglomerated particle size of the hollow fine particles was 70 nm, and the amount of Zr (as calculated as ZrO₂) contained in the hollow fine particles was 2.1 parts by mass based on 100 parts by mass of SiO₂.

A coating film having a thickness of 100 nm was formed on a glass substrate in the same manner as in Example 1 except that the dispersion (solid content concentration: 20 mass%) of the hollow fine particles in Example 5 was used, and various evaluations were carried out. The results are shown in Table 1.

### EXAMPLE 6

A dispersion of hollow fine particles was obtained in the same manner as in Example 2 except that the amount of ethanol was changed to 58.713 g, and 0.287 g of zirconium butoxide (3.2 parts by mass as calculated as ZrO₂ based on 100 parts by mass of tetraethoxysilane as calculated as SiO₂) was used instead of 0.320 g of zirconium acetylacetonate. The dispersion was concentrated to a solid content concentration of 20 mass% by ultrafiltration. The dispersion was observed by a transmission electron microscope, whereupon the average primary particle size of the hollow fine particles was 30 nm. The average agglomerated particle size of the hollow fine particles was 80 nm, and the amount of Zr (as calculated as ZrO₂) contained in the hollow fine particles was 3.2 parts by mass based on 100 parts by mass of SiO₂.

A coating film having a thickness of 100 nm was formed on a glass substrate in the same manner as in Example 1 except that the dispersion (solid content concentration: 20 mass%) of the hollow fine particles in Example 6 was used, and various evaluations were carried out. The results are shown in Table 1.

### EXAMPLE 7

To a 200 mL glass container, 5.25 g of the dispersion (solid content concentration: 20 mass%) of the hollow fine particles in Example 2, 9 g of a silicic acid oligomer solution (solid content concentration: 5 mass%) and 85.75 g of ethanol were added, followed by stirring for 10 minutes to obtain a coating composition (solid content concentration: 1.5 mass%).

A coating film having a thickness of 100 nm was formed on a glass substrate in the same manner as in Example 1 except that the coating composition in Example 7 was used, and various evaluations were carried out. The results are shown in Table 1.

### EXAMPLE 8

To a 200 mL glass container, 4.5 g of the dispersion (solid content concentration: 20 mass%) of the hollow fine particles in Example 2, 12 g of a silicic acid oligomer solution (solid content concentration: 5 mass%) and 83.5 g of ethanol were added, followed by stirring for 10 minutes to obtain a coating composition (solid content concentration: 1.5 mass%).

A coating film having a thickness of 100 nm was formed on a glass substrate in the same manner as in Example 1 except that the coating composition in Example 8 was used, and various evaluations were carried out. The results are shown in Table 1.

### EXAMPLE 9

### To a 200 mL glass container, 7.5 g of the dispersion (solid content concentration: 20 mass%) of the hollow fine particles in Example 2, and 92.5 g of ethanol were added, followed by stirring for 10 minutes to obtain a coating composition (solid content concentration: 1.5 mass%).

A coating film having a thickness of 100 nm was formed on a glass substrate in the same manner as in Example 1 except that the coating composition in Example 9 was used, and various evaluations were carried out. The results are shown in Table 1.

### EXAMPLE 10

The coating composition in Example 2 was applied to the surface of a PET film (100 mm x 100 mm x 0.2 mm in thickness) wiped with ethanol and spin-coated at a number of revolutions of 200 rpm for 60 seconds for uniformalization, and heated at 100°C for 10 minutes to form a coating film having a thickness of 100 nm, and various evaluations were carried out. The results are shown in Table 1.

### EXAMPLE 11

To a 200 mL glass container, 58.681 g of ethanol, 30.000 g of a water-dispersed sol of fine ZnO particles (average primary particle size: 20 nm, average agglomerated particle size: 40 nm, solid content concentration: 20 mass%), 10.000 g of tetraethoxysilane (solid content concentration: 28.84 mass% as calculated as SiO₂) and 0.320 g of zirconium acetylacetonate (2.8 parts by mass as calculated as ZrO₂ based on 100 parts by mass of tetraethoxysilane as calculated as SiO₂) were added, and 1.000 g of a 28 mass% aqueous ammonia solution was added to adjust the pH to 10, followed by stirring at 20°C for 6 hours to obtain 100.000 g of a dispersion of core/shell particles (solid content concentration: 8.88 mass%).

100 g of a strongly acidic cation exchange resin (total exchange capacity: at least 2.0 meq/mL) was added to 100 g of the dispersion of the core/shell particles, followed by stirring for one hour, and after the pH became 4, the strongly acidic cation exchange resin was removed by filtration to obtain a dispersion of hollow fine particles. The dispersion was concentrated to a solid content concentration of 20 mass% by ultrafiltration. The dispersion was observed by a transmission electron microscope, whereupon the average primary particle size of the hollow fine particles was 30 nm. The average agglomerated particle size of the hollow fine particles was 80 nm, and the amount of Zr (as calculated as ZrO₂) contained in the hollow fine particles was 2.8 parts by mass based on 100 parts by mass of SiO₂.

A coating film having a thickness of 100 nm was formed on a glass substrate in the same manner as in Example 1 except that the dispersion (solid content concentration: 20 mass%) of the hollow fine particles in Example 11 was used, and various evaluations were carried out. The results are shown in Table 1.

### EXAMPLE 12

A dispersion of hollow fine particles was obtained in the same manner as in Example 1 except that the amount of ethanol was changed to 59.000 g, and no zirconium acetylacetonate was added. The dispersion was concentrated to a solid content concentration of 20 mass% by ultrafiltration. The dispersion was observed by a transmission electron microscope, whereupon the average primary particle size of the hollow fine particles was 30 nm. The average agglomerated particle size of the hollow fine particles was 60 nm, and the amount of Zr (as calculated as ZrO₂) contained in the hollow fine particles was 0 part by mass based on 100 parts by mass of SiO₂.

A coating film having a thickness of 100 nm was formed on a glass substrate in the same manner as in Example 1 except that the dispersion (solid content concentration: 20 mass%) of the hollow fine particles in Example 12 was used, and various evaluations were carried out. The results are shown in Table 1.

### EXAMPLE 13

A dispersion of hollow fine particles was obtained in the same manner as in Example 1 except that the amount of ethanol was changed to 58.993 g, and the amount of zirconium acetylacetonate was changed to 0.007 g (0.06 part by mass as calculated as ZrO₂ based on 100 parts by mass of tetraethoxysilane as calculated as SiO₂). The dispersion was concentrated to a solid content concentration of 20 mass% by ultrafiltration. The dispersion was observed by a transmission electron microscope, whereupon the average primary particle size of the hollow fine particles was 30 nm. The average agglomerated particle size of the hollow fine particles was 60 nm, and the amount of Zr (as calculated as ZrO₂) contained in the hollow fine particles was 0.06 part by mass based on 100 parts by mass of SiO₂.

A coating film having a thickness of 100 nm was formed on a glass substrate in the same manner as in Example 1 except that the dispersion (solid content concentration: 20 mass%) of the hollow fine particles in Example 13 was used, and various evaluations were carried out. The results are shown in Table 1.

### EXAMPLE 14

A dispersion of fine particles was obtained in the same manner as in Example 1 except that the amount of ethanol was changed to 57.060 g, and the amount of zirconium acetylacetonate was changed to 1.940 g (17.0 parts by mass as calculated as ZrO₂ based on 100 parts by mass of tetraethoxysilane as calculated as SiO₂). The dispersion was concentrated to a solid content concentration of 20 mass% by ultrafiltration. The dispersion was observed by a transmission electron microscope, whereupon most of the fine particles were solid chain particles, and no hollow structure was maintained. The amount of Zr (as calculated as ZrO₂) contained in the fine particles was 17.0 parts by mass based on 100 parts by mass of SiO₂.

A coating film having a thickness of 100 nm was formed on a glass substrate in the same manner as in Example 1 except that the dispersion (solid content concentration: 20 mass%) of the fine particles in Example 14 was used, and various evaluations were carried out. The results are shown in Table 1.

### EXAMPLE 15

To a 200 mL glass container, 5.25 g of the dispersion (solid content concentration: 20 mass%) of the hollow fine particles in Example 12, 9 g of a silicic acid oligomer solution (solid content concentration: 5 mass%) and 85.75 g of ethanol were added, followed by stirring for 10 minutes to obtain a coating composition (solid content concentration: 1.5 mass%).

A coating film having a thickness of 100 nm was formed on a glass substrate in the same manner as in Example 1 except that the coating composition in Example 15 was used, and various evaluations were carried out. The results are shown in Table 1.

### EXAMPLE 16

To a 200 mL glass container, 4.5 g of the dispersion (solid content concentration: 20 mass%) of the hollow fine particles in Example 12, 12 g of a silicic acid oligomer solution (solid content concentration: 5 mass%) and 83.5 g of ethanol were added, followed by stirring for 10 minutes to obtain a coating composition (solid content concentration: 1.5 mass%).

A coating film having a thickness of 100 nm was formed on a glass substrate in the same manner as in Example 1 except that the coating composition in Example 16 was used, and various evaluations were carried out. The results are shown in Table 1.

### EXAMPLE 17

To a 200 mL glass container, 7.5 g of the dispersion (solid content concentration: 20 mass%) of the hollow fine particles in Example 12, and 92.5 g of ethanol were added, followed by stirring for 10 minutes to obtain a coating composition (solid content concentration: 1.5 mass%).

A coating film having a thickness of 100 nm was formed on a glass substrate in the same manner as in Example 1 except that the coating composition in Example 17 was used, and various evaluations were carried out. The results are shown in Table 1.

### EXAMPLE 18

To a 200 mL glass container, 6 g of the dispersion (solid content concentration: 20 mass%) of the hollow fine particles in Example 12, 6 g of a silicic acid oligomer solution (solid content concentration: 5 mass%), 0.006 g of zirconium acetylacetonate (0.14 part by mass as calculated as ZrO₂ based on 100 parts by mass of the hollow fine particles as calculated as SiO₂) and 87.994 g of ethanol were added, followed by stirring for 10 minutes to obtain a coating composition (solid content concentration: 1.5 mass%).

A coating film having a thickness of 100 nm was formed on a glass substrate in the same manner as in Example 1 except that the coating composition in Example 18 was used, and various evaluations were carried out. The results are shown in Table 1.

**TABLE 1**

| | (Hollow) fine particles | | | Coating composition | | Substrate | Minimum reflectance (%) | | |
|---|---|---|---|---|---|---|---|---|---|
| | Zirconium compound | As calculated as oxide (part by mass) | | Binder | (Hollow) fine particles/binder (mass ratio) | | Initial | After alkali resistance test | Δ refractive index |
| | | Si | Zr | | | | | | |
| Ex. 1 | ZrAA | 100 | 0.14 | Silicic acid oligomer | 8/2 | Glass | 0.7 | 1.3 | 0.6 |
| Ex. 2 | ZrAA | 100 | 2.8 | Silicic acid oligomer | 8/2 | Glass | 0.8 | 1.0 | 0.2 |
| Ex. 3 | ZrAA | 100 | 14.1 | Silicic acid oligomer | 8/2 | Glass | 1.2 | 1.3 | 0.1 |
| Ex. 4 | ZrAc | 100 | 5.5 | Silicic acid oligomer | 8/2 | Glass | 0.8 | 1.4 | 0.6 |
| Ex. 5 | ZrTBS | 100 | 2.1 | Silicic acid oligomer | 8/2 | Glass | 0.8 | 1.4 | 0.6 |
| Ex. 6 | ZrBu | 100 | 3.2 | Silicic acid oligomer | 8/2 | Glass | 0.8 | 1.3 | 0.5 |
| Ex. 7 | ZrAA | 100 | 2.8 | Silicic acid oligomer | 7/3 | Glass | 1.0 | 1.2 | 0.2 |
| Ex. 8 | ZrAA | 100 | 2.8 | Silicic acid oligomer | 6/4 | Glass | 1.2 | 1.4 | 0.2 |
| Ex.9 | ZrAA | 100 | 2.8 | - | 10/0 | Glass | 0.5 | 0.9 | 0.4 |
| Ex. 10 | ZrAA | 100 | 2.8 | Silicic acid oligomer | 8/2 | PET | 0.7 | 1.0 | 0.3 |
| Ex. 11 | ZrAA | 100 | 2.8 | Silicic acid oligomer | 8/2 | Glass | 0.8 | 1.6 | 0.8 |
| Ex. 12 | - | 100 | 0 | Silicic acid oligomer | 8/2 | Glass | 0.7 | 2.0 | 1.3 |
| Ex. 13 | ZrAA | 100 | 0.06 | Silicic acid oligomer | 8/2 | Glass | 0.7 | 1.8 | 1.1 |
| Ex. 14 | ZrAA | 100 | 17.0 | Silicic acid oligomer | 8/2 | Glass | 2.0 | 2.1 | 0.1 |
| Ex. 15 | - | 100 | 0 | Silicic acid oligomer | 7/3 | Glass | 0.9 | 2.1 | 1.2 |
| Ex. 16 | - | 100 | 0 | Silicic acid oligomer | 6/4 | Glass | 1.1 | 2.2 | 1.1 |
| Ex. 17 | - | 100 | 0 | - | 10/0 | Glass | 0.4 | 5.0 | 4.6 |
| Ex. 18 | - | 100 | 0 | Silicic acid oligomer+ZrAA | 8/2 | Glass | 0.8 | 1.8 | 1.0 |

| | | | | | | | | | |
|---|---|---|---|---|---|---|---|---|---|
| ZrAA: zirconium acetylacetonate, ZrAc: zirconium acetate, ZrTBS: zirconium tributoxystearate, ZrBU: zirconium butoxide. | | | | | | | | | |

The coating film of the article in each of Examples 1 to 11 had a sufficiently low reflectance before the alkali resistance test, and had a high antireflection effect. Further, the change in the reflectance by the alkali resistance test was small, and the film was excellent in the alkali resistance. Particularly, the coating film of the article in each of Examples 1 to 10 had a high effect of protecting the SiO₂ layer in the shell interior by Zr in the shell outermost layer, since such hollow fine particles were used that the shell comprising SiO₂ was precipitated, and then a zirconium compound was further added to segregate Zr in the shell outermost layer. Accordingly, the article in each of Examples 1 to 10 was more excellent in the alkali resistance than the article in Example 11 wherein Zr exists in the entire shell of each hollow fine particle.

The coating film of the article in each of Examples 12 and 15 to 17 wherein a coating composition containing hollow fine particles comprising SiO₂ alone, containing no Zr, was used, had a sufficiently low reflectance before the alkali resistance test and had a high antireflection effect, but the change in the reflectance by the alkali resistance test was significant, and the alkali resistance was insufficient.

The coating film of the article in Example 13 wherein a coating composition containing hollow fine particles with a small amount of Zr was used, had a sufficiently low reflectance before the alkali resistance test and a high antireflection effect, but the change in the reflectance by the alkali resistance test was significant, and the alkali resistance was insufficient.

The coating film of the article in Example 14 wherein a coating composition containing hollow fine particles with a large amount of Zr was used, had a high reflectance before the alkali resistance test and had an insufficient antireflection effect, since most of the fine particles were chain solid particles, and no hollow structure was maintained. However, the change in the reflectance by the alkali resistance test was small, and the coating film was excellent in alkali resistance.

The coating film of the article in Example 18 wherein a coating composition which contains hollow fine particles comprising SiO₂ alone, contains no Zr, and containing Zr as a binder, had a sufficiently low reflectance before the alkali resistance test and a high antireflection effect, but the change in the reflectance by the alkali resistance test was significant, and the alkali resistance was insufficient.

### INDUSTRIAL APPLICABILITY

The article having the coating film made of the coating composition of the present invention formed thereon is useful as e.g. a transparent component for vehicles (such as a head light cover, a side mirror, a front transparent substrate, a side transparent substrate or a rear transparent substrate), a transparent component for vehicles (such as an instrument panel surface), a meter, a building window, a show window, a display (such as a notebook computer, a monitor, LCD, PDP, ELD, CRT or PDA), a LCD color filter, a substrate for a touch panel, a pickup lens, an optical lens, a lens for glasses, a camera component, a video component, a cover substrate for CCD, an optical fiber edge face, a projector component, a copying machine component, a transparent substrate for solar cells, a screen of a cell-phone, a backlight unit component (such as a light guide plate or a cold-cathode tube), a backlight unit component liquid crystal brightness-improving film (such as a prism or a semi-transmissive film), a liquid crystal brightness-improving film, an organic EL light emitting device component, an inorganic EL light emitting device component, a phosphor light emitting component, an optical filter, an edge face of an optical component, an illuminating lamp, a cover for a light filament, an amplified laser light source, an antireflection film, a polarizing film, an agricultural film, etc.

## Claims

1. Hollow fine particles containing SiO₂ as the main component and containing Zr, wherein the Zr content (as calculated as ZrO₂), is from 0.1 to 15 parts by mass based on 100 parts by mass of SiO₂,
wherein Zr is segregated in the outermost layer of the shell,
wherein the average primary particle size of the hollow fine particles is from 5 to 100 nm, measured by observation with a transmission electron microscope, and wherein the average agglomerated particle size of the hollow fine particles is from 5 to 300 nm, measured by a dynamic light scattering method.

2. A coating composition containing the hollow fine particles as defined in Claim 1 and a dispersion medium.

3. The coating composition according to Claim 2, which further contains a binder.

4. An article comprising a substrate and a coating film made of the coating composition as defined in Claim 2 or 3 formed on the substrate.

5. A process for producing hollow fine particles containing SiO₂ as the main component and containing Zr, which comprises
(a) a step of, in a dispersion containing a SiO₂ precursor material, a zirconium compound and core fine particles, precipitating a shell containing SiO₂ as the main component and containing Zr on the surface of each core fine particle to obtain core/shell particles, and
(b) a step of dissolving or decomposing the core fine particles of the core/shell fine particles, wherein the amount of the zirconium compound (as calculated as ZrO₂) is from 0.1 to 15 parts by mass based on 100 parts by mass of the amount of the SiO₂ precursor material (as calculated as SiO₂),
wherein in the step (a), in a dispersion containing a SiO₂ precursor material and core fine particles, a shell made of SiO₂ is precipitated on the surface of each core fine particle,
and then a zirconium compound is added to segregate Zr in the outermost layer of the shell,
wherein the average primary particle size of the hollow fine particles is from 5 to 100 nm, measured by observation with a transmission electron miscroscope, and wherein the average agglomerated particle size of the hollow fine particles is from 5 to 300 nm, measured by a dynamic light scattering method.

6. The process for producing hollow fine particles according to Claim 5, wherein the SiO₂ precursor material is silicic acid, a silicate or a hydrolysable silane.

7. The process for producing hollow fine particles according to Claim 5 or 6, wherein the zirconium compound is a zirconium chelate compound, a zirconium alcoholate compound, or an organic acid or an inorganic acid of zirconium.

## Patentansprüche

1. Hohle feine Teilchen, enthaltend SiO₂ als die Hauptkomponente und enthaltend Zr, wobei der Zr-Gehalt (berechnet als ZrO₂) von 0,1 bis 15 Masse-Teile, bezogen auf 100 Masse-Teile SiO₂, beträgt,
wobei Zr in der äußersten Schicht der Schale segregiert ist,
wobei die durchschnittliche primäre Teilchengröße der hohlen feinen Teilchen von 5 bis 100 nm, gemessen durch Beobachtung mit einem Transmissionselektronenmikroskop, beträgt und wobei die durchschnittliche agglomerierte Teilchengröße der hohlen feinen Teilchen von 5 bis 300 nm, gemessen durch eine dynamische Lichtstreumethode, beträgt.

2. Beschichtungszusammensetzung, enthaltend die hohlen feinen Teilchen, wie in Anspruch 1 definiert, und ein Dispersionsmedium.

3. Beschichtungszusammensetzung gemäß Anspruch 2, welche weiter ein Bindemittel enthält.

4. Gegenstand, umfassend ein Substrat und einen Beschichtungsfilm, hergestellt aus der Beschichtungszusammensetzung, wie in Anspruch 2 oder 3 definiert, gebildet auf dem Substrat.

5. Verfahren zur Herstellung von hohlen feinen Teilchen enthaltend SiO₂ als die Hauptkomponente und enthaltend Zr, welches umfaßt
(a) in einer Dispersion, enthaltend ein SiO₂-Vorläufermaterial, eine Zirkoniumverbindung und feine Kernteilchen, einen Schritt des Ausfällen einer Schale enthaltend SiO₂ als die Hauptkomponente und enthaltend Zr auf der Oberfläche von jedem feinen Kernteilchen unter Erhalten von Kern/Schale-Teilchen und
(b) einen Schritt des Lösens oder Zersetzens der feinen Kernteilchen der feinen Kern/Schale-Teilchen, wobei die Menge der Zirkoniumverbindung (berechnet als ZrO₂) von 0,1 bis 15 Masse-Teile, bezogen auf 100 Masse-Teile der Menge des SiO₂-Vorläufermaterials (berechnet als SiO₂), beträgt,
wobei in dem Schritt (a), in einer Dispersion, enthaltend ein SiO₂-Vorläufermaterial und feine Kernteilchen, eine Schale aufgebaut aus SiO₂ auf der Oberfläche von jedem feinen Kernteilchen ausgefällt wird und anschließend eine Zirkoniumverbindung zugegeben wird, um Zr in der äußersten Schicht der Schale zu segregieren,
wobei die durchschnittliche primäre Teilchengröße der hohlen feinen Teilchen von 5 bis 100 nm beträgt, gemessen durch Beobachtung mit einem Transmissionselektronenmikroskop, und wobei die durchschnittliche agglomerierte Teilchengröße der hohlen feinen Teilchen von 5 bis 300 nm beträgt, gemessen durch eine dynamische Lichtstreuungsmethode.

6. Verfahren zur Herstellung hohler feiner Teilchen gemäß Anspruch 5, wobei das SiO₂ Vorläufermaterial Kieselsäure, ein Silikat oder ein hydrolysierbares Silan ist.

7. Verfahren zur Herstellung hohler feiner Teilchen gemäß Anspruch 5 oder 6, wobei die Zirkoniumverbindung eine Zirkoniumchelatverbindung, eine Zirkoniumalkoholatverbindung oder eine organische Säure oder eine anorganische Säure von Zirkonium ist.

## Revendications

1. Fines particules creuses contenant du SiO₂ à titre de composant principal et contenant du Zr,
dans lesquelles la teneur en Zr (calculée sous forme de ZrO₂) est de 0,1 à 15 parties en masse pour 100 parties en masse de SiO₂,
dans lesquelles Zr est ségrégé dans la couche la plus extérieure de l'enveloppe,
la granulométrie primaire moyenne des fines particules creuses étant de 5 à 100 nm, mesurée par observation au microscope électronique à transmission, et la granulométrie agglomérée moyenne des fines particules creuses étant de 5 à 300 nm, mesurée par un procédé de diffusion dynamique de la lumière.

2. Composition de revêtement contenant les fines particules creuses telles que définies dans la revendication 1 et un milieu de dispersion.

3. Composition de revêtement selon la revendication 2, qui contient en outre un liant.

4. Article comprenant un substrat et un film de revêtement, fait de la composition de revêtement telle que définie dans la revendication 2 ou 3, formé sur le substrat.

5. Procédé pour produire de fines particules creuses contenant du SiO₂ à titre de composant principal et contenant du Zr, qui comprend
(a) une étape consistant à, dans une dispersion contenant un matériau précurseur de SiO₂, un composé du zirconium et de fines particules de coeur, précipiter une enveloppe contenant du SiO₂ à titre de composant principal et contenant du Zr sur la surface de chaque fine particule de coeur pour obtenir des particules coeur/enveloppe, et
(b) une étape consistant à dissoudre ou décomposer les fines particules de coeur des fines particules coeur/enveloppe,
la quantité du composé du zirconium (calculée sous forme de ZrO₂) étant de 0,1 à 15 parties en masse pour 100 parties en masse de la quantité de matériau précurseur de SiO₂ (calculé sous forme de SpiO₂),
dans lequel, dans l'étape (a), dans une dispersion contenant un matériau précurseur de SiO₂ et de fines particules de coeur, une enveloppe faite de SiO₂ est précipitée sur la surface de chaque fine particule de coeur,
et ensuite un composé du zirconium est ajouté pour ségréger le Zr dans la couche la plus extérieure de l'enveloppe,
dans lequel la granulométrie primaire moyenne des fines particules creuses est de 5 à 100 nm, mesurée par observation au microscope électronique à transmission, et dans lequel la granulométrie agglomérée moyenne des fines particules creuses est de 5 à 300 nm, mesurée par un procédé de diffusion dynamique de la lumière.

6. Procédé pour produire de fines particules creuses selon la revendication 5, dans lequel le matériau précurseur de SiO₂ est l'acide silicique, un silicate ou un silane hydrolysable.

7. Procédé pour produire de fines particules creuses selon la revendication 5 ou 6, dans lequel le composé du zirconium est un composé chélate de zirconium, un composé alcoolate de zirconium, ou un acide organique ou un acide inorganique de zirconium.
